(19) Europäisches Patentamt
European Patent Office
Office européen des brevets

(11) **EP 1 567 012 B1**

(12) **EUROPEAN PATENT SPECIFICATION**

(45) Date of publication and mention of the grant of the patent: **30.06.2010 Bulletin 2010/26**

(21) Application number: **03767700.2**

(22) Date of filing: **28.11.2003**

(51) Int Cl.:
***A01N 41/06*** (2006.01) ***A01N 37/36*** (2006.01)
***A01N 43/32*** (2006.01)

(86) International application number:
**PCT/EP2003/013429**

(87) International publication number:
**WO 2004/049804 (17.06.2004 Gazette 2004/25)**

(54) **FUNGICIDAL COMBINATIONS FOR CROP PROTECTION**

FUNGIZIDE KOMBINATIONEN ZUM SCHUTZ VON PFLANZEN

COMBINAISONS FONGICIDES POUR PROTEGER DES CULTURES

(84) Designated Contracting States:
**AT BE BG CH CY CZ DE DK EE ES FI FR GB GR HU IE IT LI LU MC NL PT RO SE SI SK TR**

(30) Priority: **29.11.2002 GB 0227966**

(43) Date of publication of application:
**31.08.2005 Bulletin 2005/35**

(73) Proprietor: **Syngenta Participations AG**
**4058 Basel (CH)**

(72) Inventor: **HUGGENBERGER, Fritz**
**CH-4058 Basel (CH)**

(74) Representative: **Swift, Jane Elizabeth Berrisford**
**Syngenta Limited**
**Intellectual Property Department**
**Jealott's Hill International Research Station**
**P.O. Box 3538**
**Bracknell, Berkshire RG42 6YA (GB)**

(56) References cited:
**EP-A- 0 236 689** **EP-A- 0 610 764**
**WO-A-01/44215** **WO-A-01/87822**
**WO-A-99/07674** **WO-A-03/017762**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to novel fungicidal combinations for protecting crop plants against phytopathogenic diseases, and for the treatment of phytopathogenic diseases of crop plants, especially phytopathogenic fungi, to a method of protecting crop plants against phytopathogenic diseases, and of combating phytopathogenic diseases on crop plants which employs the novel combinations, and to agrochemical formulations, comprising said combinations as active ingredients.

It is known that mixtures of certain carboxylic acid amide derivatives with certain other fungicides can exhibit enhanced biological activity against phytopathogenic fungi, e.g. from EP-A-610764, WO 01/44215 and WO 01/87822. On the other hand, various fungicidal compounds of different chemical classes are widely known as plant fungicides for application in various crops of cultivated plants. However, neither the properties of the known mixtures nor the known active ingredients do not always satisfy the practitioner's need for a safe , crop-tolerated fungicidal agent having improved microbiocidal activity and characteristics against phytopathogenic plant fungi. In particular, the agricultural practice is very often in need of combating phytopathogenic fungi under newly occurring environmental conditions which can be arising when translocating a crop into geographical areas where formerly this crop plant was never cultivated. Specifically under the changed conditions, such as climate-specific disease pressure on crops, or when a fungal disease has become hardly controllable under the changed growing conditions or has developed resistance against the employed fungicide, or where a formerly unknown fungal disease occurs in said crop. Further, an increased demand for improved fungicidal combinations is arising from development of resistance against more and more well-known fungicides as observed in certain classes of phytopathogenic fungi. The building up of resistance to fungicides can make a traditionally well-performing fungicidal agent ineffective for protecting the host crop against a certain fungal disease.

The progress of agricultural techniques thus creates a permanent need for improved methods for controlling fungal infection of crop plants solution, capable of protecting the practitioner from losses of harvest yields by fungal infections, which may comprise providing specific activity against the resistant strains of plant fungi, or having an otherwise improved level of fungicidal activity.

It has now been found that the combination of component A, the dithia-anthrecene of formula I

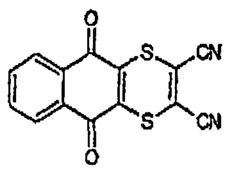

(I)

with a second component B or an optically pure enantiomer thereof, namely with
a N-alkylsulfonyl-alpha-amino acid amide derivative of formula III

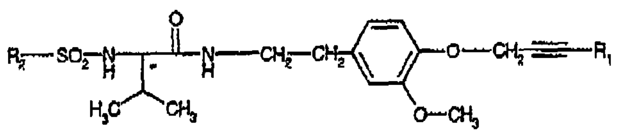

(III)

wherein
$R_1$ is hydrogen, $C_{1-}C_4$alkyl, $C_{3-}C_8$cycloalkyl or halophenyl, and
$R_2$ is $C_{1-}C_4$alkyl; or with
an alpha-alkynyloxyphenylacetic acid amide derivative of formula IV

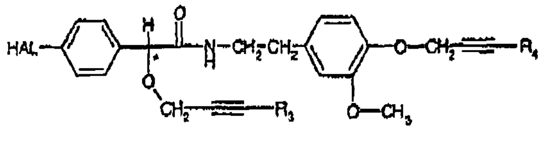

(IV)

wherein
HAL stands for halogen, specially for fluoro, chloro or bromo;
$R_3$ is hydrogen, $C_{1-}C_4$alkyl or halophenyl; and

$R_4$ is hydrogen, $C_1$-$C_4$akyl, $C_3$-$C_6$cycloalkyl or halophenyl;
is particularly effective in combating or preventing fungal diseases of crop plants.

These combinations are capable of satisfying to some extent the need for effective new agents suitable for controlling phytopathogenic diseases for which have so far no effective fungicide has been known, or where the formerly employing active ingredients have become ineffective, or where the level of efficacy is enhanced to such extend that only now a cost-efficient and environmentally acceptable control of fungal diseases becomes possible, because the combined active ingredients influence each other activity in a synergistic manner.

Throughout this document the expression combination stands for the various combinations of components A) and B), e.g. in a single "ready-mix" form, tike a ready-to-use formulation comprising the two active components in a fixed ratio; or in a combined spray mixture composed from separate formulations of the single active ingredient components, e.g. a "tank-mix", or in a combined use of the single active ingredients when applied In common spray plan or schedule a sequential manner, i.e. one after the other with a reasonably short period, e.g. a few hours or days. When applied in separate sprays following each other, the order of applying the components A) and B) is not essential for achieving the biological results according to the present invention.

The combinations according to the invention may in combination with the essential components A) and B) further comprise one or more crop protecting agents, like fungicides, insecticides, acaricides, plant growth regulators, algaecides, molluscicides, or even herbicides under special circumstances. Of course, the additional fungicides may comprise also a second or third species selected from group B), if broadening or further variation of the spectrum of disease control is desired. For instance, it may be advantageous in the agricultural practice to combine two or three compounds of component B) selected from the formulae III and IV with component A).

Depending upon the number of carbon atoms mentioned, alkyl on its own or as part of another substituent is to be understood as being, for example, methyl, ethyl, propyl, butyl and the isomers thereof, for example isopropyl, isobutyl, tett-butyl or sec-butyl.

Cycloalkyl is, depending upon the number of mentioned carbon atoms, cyclopropyl, cyclobutyl, cyclopentyl or cyclohexyl.

A halophenyl group may contain one or more (identical or different) halogen atoms, and for example may stand for fluorophenyl, chlorophenyl, bromophenyl or iodophenyl, being optionally further substituted with preferably one or two fluoro, chloro or bromo radicals. Examples include 2-fluorophenyl, 3-fluorophenyl, 4-fluorophenyl, 2-chlorophenyl, 3-chlorophenyl, 4-chlorophenyl, 2-bromophenyl, 3-bromophenyl, 4-bromophenyl, 2,4-difluorophenyl, 3,4-difluorophenyl, 2-chloro-4-fluorophenyl, 2,4-dichlorophenyl, 3,4-dichlorophenyl, 2-fluoro-4-chlorophenyl, 2-bromo-4-fluoro-phenyl, 3-bromo-4-fluorophenyl, 4-bromo-2-fluoro-phenyl, 2,5-difluorophenyl, 3,5-difluorophenyl, 2,6-dichloro-4-fluorophenyl, 2,5-chlorophenyl, 3,5-chlorophenyl, 3,4,5-trichlorophenyl, 2-bromo-4,5-dichlorophenyl, 5-bromo-2,4-dichlorophenyl and 4-bromo-2,6-dichlorophenyl.

The presence of at least one asymmetric carbon atom in the compounds of formulae III and IV means that the compounds may occur in optically isomeric and enantiomeric forms. As a result of the presence of a possible steric hindrance of free rotation around an aliphatic carbon-carbon single bond geometric isomerism may also occur. Formulae III and IV are intended to include all those possible isomeric and enantiomeric forms and mixtures thereof.

Preferred subgroups of compounds of formula III and IV are those wherein
Hal designates fluoro or chloro, or
Hal is fluoro; or
$R_1$ is hydrogen or halophenyl; or
$R_1$ is hydrogen, fluorophenyl or chlorophenyl; or
$R_1$ is chlorophenyl; or
$R_2$ is $C_1$-$C_3$alkyl; or
$R_2$ is methyl or ethyl; or
$R_2$ is methyl; or
$R_1$ is hydrogen, fluorophenyl or chlorophenyl; and $R_2$ is methyl or ethyl; or
$R_1$ is chlorophenyl and $R_2$ is methyl or ethyl; or
HAL is fluoro, chloro or bromo; or
HAL is chloro or bromo; or
$R_3$ is hydrogen or $C_1$-$C_3$alkyl; or
$R_3$ is hydrogen or methyl; or
$R_3$ is hydrogen; or
$R_4$ is hydrogen or $C_1$-$C_3$alkyl; or
$R_4$ is hydrogen or methyl; or
$R_4$ is hydrogen; or
HAL is chloro or bromo; $R_3$ is hydrogen or methyl; and $R_4$ is hydrogen or methyl; or
HAL is chloro or bromo; and $R_3$ and $R_4$ are hydrogen.
In particular, component B) is preferably selected from the group consisting of

N-(2-{4-[3-(4-chloro-phenyl)-prop-2-ynyloxy]-3-methoxy-phenyl}-ethyl)-2-methanesulfonylamino-3-methyl-butyramide (formula IIIa)

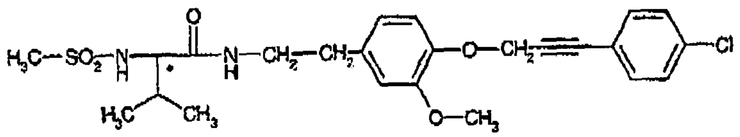

(IIIa) ,

N-(2-{4-[3-(4-chloro-phenyl)-prop-2-ynyloxy]-3-methoxy-phenyl}-ethyl)-2-ethanesulfonylamino-3-methyl-butyramide (formula IIIb)

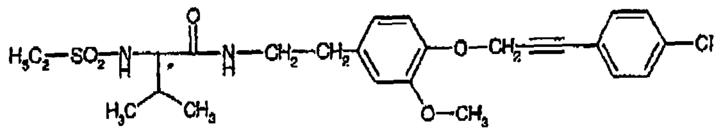

(IIIb) ,

2-(4-chloro-phenyl)-N-[2-(3-methoxy-4-prop-2-ynyloxy-phenyl)-ethyl]-2-prop-2-ynyloxyacetamide (formula IVa)

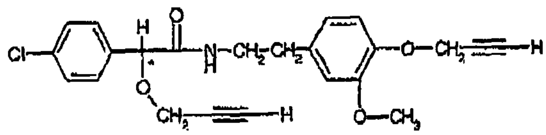

(IVa) ,

2-(4-bromo-phenly)-N-[2-(3-methoxy-4-prop-2-ynyloxy-phenyl)-ethyl]-2-prop-2-ynyloxyacetamide (formula IVb)

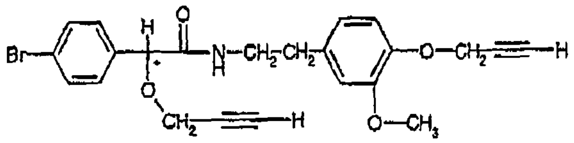

(IVb) ,

For the purpose of this invention, Component B may also be a pure optical isomer or enantiomer of one of the compounds of component B.

The compound of formula I is known to the practitioner as Dithianon, descnbed e.g. in The Pesticide Manual, 12th Edition, entry 274.

The compounds of formulae III and IV are known from WO 99/07674 and WO 01/87822. Compounds IIIa and IIIb are disclosed as compounds 1.003 and 1.035 in the earlier document, while compounds IVa and IVb are E1.011 and E1.025 in the latter.

The specific compounds of component B) mentioned in the preceding paragraphs are either commercially available or obtainable according to procedures analogous to those published in the respective patent documents or the literature cited therein.

It has been found that the use of compounds of formulae III to IV in combination with the compound of formula I surprisingly and substantially enhance the effectiveness of the latter against fungi, and vice versa. Additionally, the method of the invention is effective against a wider spectrum of such fungi that can be combated with the active ingredients of this method, when used solely.

The novel combinations of active ingredients are extremety effective on a broad spectrum of phytopathogenic fungi, in particular against the following classes: Ascomycetes (e.g. *Venturia*, *Podosphaera, Erysiphe, Monilinia, Mycosphaerella, Uncinula*); Basidiomycetes (e.g. the genus *Hemileia, Rhizoctonia, Puccinia*); Oomycetes (e.g. *Phytophthora, Peronospora, Pseudoperonospora, Albugo, Bremia, Pythium, Pseudosclerospora* and *Plasmopara*), and Fungl imperfecti (also known as Deuteromycetes; e.g. *Botrytis, Helminthosporium, Rhynchsoporium, Fusarium, Septoria, Cercospora, Alternaria, Pyricularia* and *Pseudocercosporella herpotrichoides*).

Target crops for the areas of indication disclosed herein comprise within the scope of this invention e.g. the following species of plants: beet (sugar beet and fodder beet); pomes, stone fruit and soft fruit (apples, pears, plums,

peaches, almonds, cherries, strawberries, raspberries and blackberries); leguminous plants (beans, lentils, peas, soybeans); oil plants (rape, mustard, poppy, olives, sunflowers, coconut, castor oil plants, cocoa beans, groundnuts); cucumber plants (marrows, cucumbers, melons); fibre plants (cotton, flax, hemp, jute); citrus fruit (oranges, lemons, grapefruit, mandarins); vegetables (spinach, lettuce, asparagus, cabbages, carrots, onions, tomatoes, potatoes, paprika); lauraceae (avocados, cinnamon, camphor); or plants such as maize, tobacco, nuts, coffee, sugar cane, tea, vines, hops, durian, bananas and natural rubber plants, as well as turf and ornamentals (flowers, shrubs, broad-leaved trees and evergreens, such as conifers). This list does not represent any limitation. Crops of elevated interest in connection with present invention are field crops such as potatoes, tobacco, sugarbeets and cereals like wheat, rye, barley, oats, rice, maize, and further lawns, cotton, soybeans, coffee, sugarcane, fruit and ornamentals in horticulture and grapes in viticulture, and in vegetables such as cucumbers, beans, lettuce and cucurbits. The combinations may be used as foliar and soil fungicides.

The fungicidal combinations show systemic activity which allows transport and translocation of the active fungicide with the transport of nutritional fluids in the soil and in the treated plants. For the practitioner this is of particular interest because it allows effective long-term controlling a large number of fungi in various crops.

The combinations of the present invention may also be used in the area of protecting technical material against attack of fungi. Technical areas include wood, paper, leather, constructions, cooling and heating systems, ventilation and air conditioning systems, and the like. The combinations according the present invention can prevent the disadvantageous effects such as decay, discoloration or mold.

The combinations according to the invention are applied by treating either the locus of the fungi , e.g. the soil or the material on which the fungus grows, including materials on which fungal spores and other dormant forms are stored and proliferate during the periods when the crop host plants are not cultivated; or by treating the crop seeds, cultivated plants or plant materials threatened by fungal infestation, with a fungicidally effective amount of the active ingredients. The fungicidal combinations may be applied before or after infection of the materials, plants or seeds by the fungi.

The novel combinations are particularly useful for controlling the following common diseases on crop plants:

*Alternaria* species in fruit and vegetables,
*Botrytis cinerea* (gray mold) in strawberries, tomatoes and grapes,
*Bremia lactucae* in lettuce,
*Cercospora arachidicola* in groundnuts,
*Colletotrichum* musae on banana
*Erysiphe cichoracearum* and *Sphaerotheca fuliginea* in cucurbits,
*Fusarium* and *Verticillium* species in various plants, etc.
*Fusarium moniliforme* on banana
*Fusarium pallidoroseum* on banana
*Monilinia fructigena* on apples
*Penicillium digitatum* on citrus
*Penicillium expansum* on apples
*Penicillium italicum* on citrus
*Peronospora tabacina* in tobacco,
*Phyctaena vagabunda* on apples
*Phytophthora infestans* in potatoes and tomatoes,
*Plasmopara viticola* in grapes,
*Pseudoperonospora cubensis* in cucurbits,
*Pyricutaria oryzae* in rice,
*Pythium* spp. in turf, ornamentals and cotton,
*Rhizoctonia* species in cotton, rice and lawns,
*Uncinula necator, Guignardia bidwellii* and *Phomopsis viticola* in vines,
*Verticillium theobromae* on banana

As a preferred embodiment of this invention, the combinations according to the present invention are particularly effective against downy mildews and late blights, in particular against pathogens of grapes, potatoes, tomatoes, cucurbits and tobacco. They are furthermore particularly effective against leafspot species and early blights; especially against Alternaria in potatoes, tomatoes, cucurbits, and black rot, red fire, powdery mildew, grey mold and dead arm disease in vine.

The amount of combination of the invention to be applied, will depend on various factors such as the compound employed, the subject of the treatment (plant, soil, seed), the type of treatment (e.g. spraying, dusting, seed dressing), the purpose of the treatment (prophylactic or therapeutic), the type of fungi to be treated, the infection pressure which

in turn is depending on concentration and fitness of infecting spores or conidia, and the application time, relative to the seasonal and short term climatic conditions influencing the maturity status of the phytopathogenic fungus.

Specific preferred mixtures according to the present invention are understood to be represented by the combinations of active ingredients of formulae III or IV, or any of the species IIIa, IIIb, IVa or IVb with Dithianon of formula I. Most preference is given to the mixtures of Dithiano with the compounds of formulae IVa or IVb. Should a third or fourth active fungicidal ingredient be employed as additive to any two-component combination according to this invention, such additive is preferably again selected from the individual chemical compounds encompassed by formulae III and IV, or any optical Isomer thereof.

The weight ratio of A): B) is so selected as to produce a synergistic fungicidal action. In general the weight ratio of A) : B) is between 200 : 1 and 1 : 5 ; preferably between 20 :1 and 2 1, and even more preferred between 15 : 1 and 3 : 1, for example 10 : 1, 8 : 9, 6 : 1 ; 5 : 1 : 4 : or 3.5 : 1.

When the compounds of formulae III or IV are combined with Dithianon, the amount of component B) may be lowered relative to the given general application recommendation, thus requiring the higher value of the above weight ratios.

The synergistic action of the composition is apparent from the fact that the fungicidal action of the composition of A) + B) is greater than the calculated sum of the fungicidal effects of the activities of A) and B) when assessed individually.

The method of the invention comprises applying to the treated plants or the focus thereof in admixture or separately, a fungicidally effective aggregate amount of a compound of formula I and a compound of component B).

The term locus as used herein is intended to embrace the fields on which the treated crop plants are growing, or where the seeds of cultivated plants are sown, or the place where the seed will be placed into the soil. The term seed is intended to embrace plant propagating material such as cuttings, seedlings, seeds, germinated or soaked seeds.

When applied to the plants the compound I (component A) is applied at a rate of 100 to 2000 g/ha, particularly 500 to 1000 g/ha, and most preferred 500 to 750 g/ha, e.g. 500, 550, 600, 650 or 700g/ha, in association with 10 to 500 g/ha, particularly 50 to 250 g/ha, and most preferred 50 to 150 g/ha, e.g. 50, 55, 60, 70, 75, 80, 85, 90, 95100,110, 115, 120, 125 or 130 g/ha of a compound of formulae III or IV (component 8).

In agricultural practice the application rates of the combinations depend on the type of effect desired, and range from 110 to 3000 g of active ingredient per hectare. Most practical l application rates In agricultural practice 500 to 1200 g/ha.

When the combination of active ingredients are used for treating seed, rates of 0.001 to 50, and preferably from 0.01 to 10g per kg of seed are generally sufficient.

The invention also provides fungicidal compositions being predetermined in their mixture ratio of active components and comprising the compound of formula I and one compound of component B). Optimally such compositions may contain further components which can broaden the spectrum of the biological activity, or can simply help to save spraying workload for the practitioner.

The composition of the invention may be employed in any conventional form, for example in the form of a twin pack, an Instant granulate, a flowable formulation, an emulsion concentrate or a wettable powder In combination with agriculturally acceptable adjuvants. Such compositions may be produced in conventional manner, e.g. by mixing the active ingredients with appropriate adjuvants (diluents or solvents and optionally other formulating Ingredients such as surfactants). Also conventional slow release formulations may be employed where long lasting efficacy is intended. Particularly formulations to be applied in spraying forms such as water dispersible concentrates or wettable powders may contain surfactants such as wetting and dispersing agents, e.g. the condensation product of formaldehyde with naphthalene sulphonate, an alkylarylsulphonate, a lignin sulphonate, a fatty alkyl sulphate, and ethoxylated alkylphenol and an ethoxylated fatty alcohol.

A seed dressing formulation is applied in a manner known per se to the seeds employing the combination of the invention and a diluent in suitable seed dressing formulation form, e.g. as an aqueous suspension or in a dry powder form having good adherence to the seeds. Such seed dressing formulations are known in the art. Seed dressing formulations may contain the single active ingredients or the combination of active ingredients in encapsulated form, e.g. as slow release capsules or microcapsules.

In general, the formulations include from 0.01 to 90% by weight of active agent, from 0 to 20% agriculturally acceptable surfactant and 10 to 99.99% solid or liquid adjuvant(s), the active agent consisting of at least the compound of formula I together with a compound of component B), and optionally other active agents, particularly microbiocides or conservatives or the like. Concentrated forms of compositions generally contain in between about 2 and 80%, preferably between about 5 and 70% by weight of active agent. Application forms of formulation may for example contain from 0.01 to 20% by weight, preferably from 0.01 to 5% by weight of active agent. Whereas commercial products will preferably be formulated as concentrates, the end user will normally employ dilute formulations.

The Examples which follow serve to illustrate the invention, "active ingredient" denoting a mixture of compound I and a compound of component B) in a specific mixing ratio.

Formulation Examples

| Wettable powders | a) | b) | c) |
|---|---|---|---|
| active ingredient [I : comp B) = 8:1 (a), 5:1 (b), 3:1 (c)] | 25 % | 50 % | 75 % |
| sodium lignosulfonate | 5 % | 5 % | - |
| sodium lauryl sulfate | 3 % | - | 5% |
| sodium diisobutylnaphthalenesulfonate | - | 6 % | 10% |
| phenol polyethylene glycol ether (7-8 mol of ethylene oxide) | - | 2% | - |
| highly dispersed silicic acid | 5 % | 10% | 10% |
| kaolin | 62% | 27 % | - |

The active ingredient is thoroughly mixed with the adjuvants and the mixture is thoroughly ground in a suitable mill, affording wettable powders which can be diluted with water to give suspensions of the desired concentration.

| Emulsifiable concentrate | |
|---|---|
| active ingredient (I : comp B) = 6:1) | 10 % |
| octylphenol polyethylene glycol ether (4-5 mol of ethylene oxide) | 3 % |
| calcium dodecylbenzenesulfonate | 3 % |
| castor oil polyglycol ether (35 mol of ethylene oxide) | 4 % |
| cyclohexanone | 30 % |
| xylene mixture | 50 % |

Emulsions of any required dilution, which can be used in plant protection, can be obtained from this concentrate by dilution with water.

| Dusts | a) | b) | c) |
|---|---|---|---|
| active ingredient [I : comp B) = 7:1 (a), 10:1 (b), 1:1 (c)] | 5 % | 6 % | 4 % |
| talcum | 95 % | - | - |
| kaolin | - | 94 % | - |
| mineral filler | - | - | 96 % |

Ready-for-use dusts are obtained by mixing the active ingredient with the carrier and grinding the mixture in a suitable mill. Such powders can also be used for dry dressings for seed.

| Extruder granules | a) | b) |
|---|---|---|
| active ingredient (I : comp B) = 2:1) | 15 % | 25% |
| sodium lignosulfonate | 2 % | 3% |
| carboxymethylcellulose | 1 % | 1 % |
| kaolin | 82 % | 71 % |

The active ingredient is mixed and ground with the adjuvants, and the mixture is moistened with water. The mixture is extruded and then dried in a stream of air.

| Coated granules | |
|---|---|
| active ingredient (I :comp B) = 120:1) | 8 % |
| polyethylene glycol (mol. wt. 200) | 3 % |
| kaolin | 89% |

The finely ground active ingredient is uniformly applied, in a mixer, to the kaolin moistened with polyethylene glycol. Non-dusty coated granules are obtained in this manner.

| Suspension concentrate | |
| --- | --- |
| active ingredient (I : comp B) = 4:1) | 40 % |
| propylene glycol | 10 % |
| nonylphenol polyethylene glycol ether (15 mol of ethylene oxide) | 6 % |
| sodium lignosulfonate | 10 % |
| carboxymethylcellulose | 1 % |
| silicone oil (in the form of a 75 % emulsion in water) | 1 % |
| water | 32 % |

The finely ground active ingredient is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

Slow Release Capsule Suspension

28 parts of a combination of the compound of formula I and a compound of component B), or of each of these compounds separately, are mixed with 2 parts of an aromatic solvent and 7 parts of toluene diisocyanate/polymethylene-polyphenylisocyanate-mixture (8:1). This mixture is emulsified in a mixture of 1.2 parts of polyvinylalcohol, 0.05 parts of a defoamer and 51.6 parts of water until the desired particle size is achieved. To this emulsion a mixture of 2.8 parts 1,6-diaminohexane in 5.3 parts of water is added. The mixture is agitated until the polymerization reaction is completed.

The obtained capsule suspension is stabilized by adding 0.25 parts of a thickener and 3 parts of a dispersing agent. The capsule suspension formulation contains 28% of the active ingredients. The medium capsule diameter is 8-15 microns.

The resulting formulation is applied to seeds as an aqueous suspension in an apparatus suitable for that purpose.

Biological Examples

A synergistic effect exists whenever the action of an active ingredient combination is greater than the sum of the actions of the individual components.

The action to be expected E for a given active ingredient combination obeys the so-called COLBY formula and can be calculated as follows (COLBY, S.R. "Calculating synergistic and antagonistic responses of herbicide combination". Weeds, Vol. 15, pages 20-22; 1967):

ppm = milligrams of active ingredient (= a.i.) per liter of spray mixture
X = % action by active ingredient I using p ppm of active ingredient
Y = % action by active ingredient II using q ppm of active ingredient.

According to COLBY, the expected (additive) action of active ingredients A)+B) using p+q ppm of active ingredient is $$E = X + Y - \frac{X \cdot Y}{100}$$

If the action actually observed (O) is greater than the expected action (E), then the action of the combination is super-additive, i.e. there is a synergistic effect. In mathematical terms the synergism factor SF corresponds to O/E. In the agricultural practice an SF of ≥ 1.2 indicates significant improvement over the purely complementary addition of activities (expected activity), while an SF of ≤ 0.9 in the practical application routine signals a loss of activity compare to the expected activity.

Alternatively the synergistic action may also be determined from the dose response curves according to the so-called WADLEY method. With this method the efficacy of the a.i. is determined by comparing the degree of fungal attack on treated plants with that on untreated, similarly inoculated and incubated check plants. Each a.i. is tested at 4 to 5 concentrations. The dose response curves are used to establish the EC90 (i.e. concentration of a.i. providing 90% disease control) of the single compounds as well as of the combinations ($EC\ 90_{observed}$). The thus experimentally found values of the mixtures at a given weight ratio are compared with the values that would have been found were only a complementary efficacy of the components was present ($EC\ 90\ (A+B)_{expected}$). The $EC\ 90\ (A+B)_{expected}$ is calculated according to Wadley (Levi et al., EPPO- Bulletin 16, 1986, 651-657):

$$EC\,90\,(A+B)_{expected} = \frac{a+b}{\dfrac{a}{EC90\,(A)_{observed}} + \dfrac{b}{EC90\,(B)_{observed}}}$$

wherein a and b are the weight ratios of the compounds A and B in the mixture and the indexes (A), (B), (A+B) refer to the observed EC 90 values of the compounds A, B or the given combination A+B thereof. The ratio EC90 $(A+B)_{expected}$ / EC90 $(A+B)_{observed}$ expresses the factor of interaction, the synergy factor (SF). In case of synergism, SF is >1.

Example B-1: Action against *Plasmopara viticola* on grapes

5 week old grape seedlings cv. Gutedel are treated with the formulated test mixture in a spray chamber. One day after application of the active ingredients and of the mixture of active ingredients the grape plants are inoculated by spraying a sporangia suspension (4 x $10^4$ sporangia/ml) of *Plasmopara viticola* on the lower leaf side of the test plants. After an incubation period of 6 days at +21 °C and 95% r. h. in a greenhouse the disease incidence is assessed. The fungicide interactions in the mixtures are calculated according to the COLBY method.

Example B-2: Activity against *Plasmopara viticola* on grape (cv Gutedel) leaf discs

The efficacy of the mixtures against *Plasmopara viticola* may be determined in micro scale on grape leaf discs in 24-well plates (repeated on 4 discs per variation).
The solo compounds of formula I and of components B) and the mixtures are protectively applied on the lower leaf side of leaf discs laying on 0.2% water agar one day prior to inoculation. The inoculation is done by spraying the sporangial suspension (70'000 sp/ml) on the lower leaf side. The infected (sporulating) area of each leaf disc is measured 7-8 days after incubation (under standard conditions in a climatic chamber +18°C, 12 hours day/night cycle) as a %-value of the total leaf disc area. The activity is calculated as a %-value relative to the disease rate on fully infected, untreated grape leave discs.
The expected fungicide interactions of the components in the mixtures (E-values) are calculated according to the method of COLBY.

Example B-3: Activity against *Uncinula necator* on grapes

Grape plants in the 4-6 leaf stage, variety Gutedel, are inoculated with conidia of *Uncinula necator* by dusting the conidia over the test plants. After 2 days under high humidity and reduced light intensity, the plants are incubated for 10-14 days in a growth chamber at 70% r. h. and +22°C. 3 days after inoculation the active ingredients and the mixtures are applied by spraying aqueous suspensions being prepared by suspending the a.i.s in demineralized water and appropriate dilution. 5 plants are used for every treatment. 12 days after inoculation the tests are evaluated by estimating the percentage of fungal leaf attack relative to the disease on the check plants. The fungicide interactions in the mixtures are calculated according to the COLBY method.

Example B-4: Activity against *Phytophthora infestans* in tomatoes

a) Curative action

Tomato plants cv. "Roter Gnom" are grown for three weeks and then sprayed with a zoospore suspension of the fungus and incubated in a cabin at +18 to +20°C and saturated atmospheric humidity. The humidification is interrupted after 24 hours. After the plants have dried, they are sprayed with a mixture which comprises the active ingredients formulated as a wettable powder at a concentration of 200 ppm. After the spray coating has dried, the plants are returned to the humid chamber for 4 days. Number and size of the typical foliar lesions which have appeared after this time are used as a scale for assessing the efficacy of the test substances.

b) Preventive-systemic action

The active ingredient which is formulated as a wettable powder is introduced, at a concentration of 60 ppm

(relative to the soil volume), onto the soil surface of three-week-old tomato plants cv. "Roter Gnom" in pots. After an interval of three days, the underside of the leaves is sprayed with a zoospore suspension of *Phytophthora infestans*. They are then kept for 5 days in a spray cabinet at +18 to +20°C and saturated atmospheric humidity. After this time, typical foliar lesions appear whose number and size are used for assessing the efficacy of the test substances.

Example B-5: Activity against *Phytophthora* on potato plants

a) Residual-protective action

2-3 week old potato plants (Bintje variety) are grown for 3 weeks and then sprayed with a spray mixture (0.02% of active ingredient) prepared with a wettable powder of the active ingredients. After 24 hours, the treated plants are infected with a sporangia suspension of the fungus. The fungus infestation is assessed after the infected plants have been incubated for 5 days at a relative atmospheric humidity of 90-100% and +20°C.

b) Systemic action

A spray mixture (0.002% of active ingredients based on the soil volume) prepared with a wettable powder of the active ingredients is poured to the soil next to 2-3 week old potato plants (Bintje variety) which have been grown for 3 weeks. Care is taken that the spray mixture does not come into contact with the aerial parts of the plants. After 48 hours, the treated plants are infected with a sporangia suspension of the fungus. Fungus infestation is assessed after the infected plants have been incubated for 5 days at a relative atmospheric humidity of 90-100% and +20°C.

Example B-6: Activity against *Phytophthora infestans* on potato (cv. Bintje) leaf discs

The efficacy of the mixtures against *Phytophthora infestans* may be determined in micro scale on potato leaf discs in 24-well plates (repeated on 4 discs per variation).
The solo compounds and the mixtures are protectively applied on the lower leaf side of leaf discs laying on 0.2% water agar one day prior to inoculation. The inoculation is done with one droplet (30 μl) per disc of the sporangial suspension (50'000 sp./ml). The infected (sporulating) area of each leaf disc is measured 6 days after incubation (under standard conditions in a climatic chamber +18°C, 12 hours day/night cycle) as a %-value of the total leaf disc area. The activity is calculated as a %-value relative to the disease rate on fully infected, untreated potato leave discs.
The expected fungicide interactions of the components in the mixtures (E-values) are calculated according to the method of COLBY.

Example B-7: Action against *Monilinia fructigena* on apples

Mature ripe fruit of a susceptible apple cultivar are treated with the formulated test mixture in a spray chamber. One day after application of the active ingredients and of the mixture of active ingredients the apples are inoculated by spraying a spore suspension (4 x $10^4$ spores/ml) of *Monilinia fructigena* directly onto the test apples. After an incubation period of 7-14 days at +21 °C and 95% r. h. in a growth chamber the disease incidence and severity is assessed. The fungicide interactions in the mixtures are calculated according to the COLBY method.

Example B-8: Activity against *Penicillium expansum* on apples

Mature ripe fruit of a susceptible apple cultivar are treated with the formulated test mixture in a spray chamber. One day after application of the active ingredients and of the mixture of active ingredients the apples are inoculated with conidia of *Penicillium expansum* by spraying a suspension of conidia onto the test apples. After an incubation period of 7-14 days in a growth chamber at 70% r. h. and +22°C the disease incidence and severity is assessed. The fungicide interactions in the mixtures are calculated according to the COLBY method.

Example B-9: Activity agains *Phlyctaena vagabunda* on apples

Mature ripe fruit of a susceptible apple cultivar are treated with the formulated test mixture in a spray chamber. One day after application of the active ingredients and of the mixture of active ingredients the apples are inoculated with conidia of *Phlyctaena vagabunda* by spraying a suspension of conidia onto the test apples. After an incubation period of 7-14 days in a growth chamber at 70% r. h. and +22°C the disease incidence and severity is assessed. The fungicide interactions in the mixtures are calculated according to the COLBY method.

Example B-10: Activity against *Colletotrichum musae* on banana

Mature ripe bananas are treated with the formulated test mixture in a spray chamber. One day after application of the active ingredients and of the mixture of active ingredients the apples are inoculated with conidia of *Colletotrichum musae* by spraying a suspension of conidia onto the test bananas. After an incubation period of 7-14 days in a growth chamber at 70% r. h. and +22°C the disease incidence and severity is assessed. The fungicide interactions in the mixtures are calculated according to the COLBY method.

Example B-11: Activity against *Fusarium moniliforme* on banana

Mature ripe bananas are treated with the formulated test mixture in a spray chamber. One day after application of the active ingredients and of the mixture of active ingredients the apples are inoculated with conidia of *Fusarium moniliforme* by spraying a suspension of conidia onto the test bananas. After an incubation period of 7-14 days in a growth chamber at 70% r. h. and +22°C the disease incidence and severity is assessed. The fungicide interactions in the mixtures are calculated according to the COLBY method.

Example B-12: Activity against *Penicillium digitatum* on citrus

Mature ripe fruit of a susceptible orange cultivar are treated with the formulated test mixture in a spray chamber. One day after application of the active ingredients and of the mixture of active ingredients the apples are inoculated with conidia of *Penicillium digitatum* by spraying a suspension of conidia onto the test apples. After an incubation period of 7-14 days in a growth chamber at 70% r. h. and +22°C the disease incidence and severity is assessed. The fungicide interactions in the mixtures are calculated according to the COLBY method.

The mixtures according to the invention exhibit good activity in all of the above Examples, where otherwise no individually specified data are reported.

Example B-13: Field Activity against DMEM-desensitized Plasmopara viticola on vine plants

In a cultivated vineyard growing the vine of the variety "Carignan" in single rows of routinely trimmed adult plants, randomly selected test plots (size: one row of plants of 5 meters length) were treated during the growing season (May to July) with repeated sprays of Dithianon and a compound of component B) at spraying intervals of 7 to 10 days. The tests were run in 3 replications and the results assessed as mean values of the three individual evaluations.

The first spray treatment was applied 3 days after the first natural infection with wild-type Plasmopara viticola has been observed in the test plots in early May, namely at the stage of 5 unfolded leaves on the newly growing shots. The individual sprays were applied with a knapsack sprayer as dilute spray dispersions at varying application rates of Dithianon and of the selected members of the component B), either as sprays of the single active ingredients, or as spray of the combination of the active ingredient as a tank-mix. The sprays where each applied in volumes of 1000 liter/ha, allowing to wet the surface of the treated plants and leaves to the runoff point.

Four days after the second spray treatment and six days before the third spray, corresponding to the 7-leave stage of the new shots and shortly before the vine blossoms opened, the trial plots were artificially inoculated with a selected strain of Plasmopara viticola which had been desensitized to the fungicidal effect of Dimethomorph (DMEM). The control of the fungal infection by the tested compounds and combinations was assessed in percent , relative to the inoculated, but untreated control plots (0% control) by evaluating the severity of the infection of the tested plants in % of infected leave area. Three evaluations/assessments of the controlling effect on the fungal disease symptoms were done at 40 and 47 days after artificial inoculation, followed by a final evaluation made three weeks after termination of the series of spray applications, i.e. at the end of August. The results of controlling the fungal infection in % are recorded in the following Table, and have been analyzed according to the Colby method. The comparison of the experimentally confirmed control rates of the combinations with the expectable controlling effect, which can be calculated from the combination of the activities of the individually tested single active ingredients via the COLBY formula show a significantly increased level of control, indicating that the combination of compound I with an ingredient of component B) achieves a synergistic enhancement of the fungicidal effect on *Plasmopara viticola*, even when the fungal strain is less sensitive to certain classes of fungicides, e.g. DMEM, than the related wild type of the said fungus.

Table:

| *Plasmopara viticola* (DMEM-desensitized, inoculated) in Vine (var. Carignan) | | | | | | | |
|---|---|---|---|---|---|---|---|
| Active Ingredient | Applic.-Rate | Control of fungal infection in Percent | | | | | |
| Evaluation: **exp./ calc.** | g a.i./ha in 1000l/ha | 40 Dal **exp.** | 40 Dal **calc.** | 47 Dal **exp.** | 47 Dal **calc.** | 86 Dal (22 DalT) **exp.** | 86 Dal (22 DalT) **calc.** |
| Dithianon | 630 | 48.6 | | 46.9 | | 46.0 | |
| Compound IVa | 125 | 26.4 | | 5.7 | | 5.1 | |
| Dithianon + Compound IVa | 630 + 125 | 76.9 | 62.2 | 76.9 | 49.9 | 61.7 | 48.8 |
| exp.: value found in experiment; calc.: value, calculated via COLBY<br>Dal: days after inoculation; DalT days after last treatment | | | | | | | |

**Claims**

**1.** A method of combating phytopathogenic diseases on crop plants which comprises applying to the crop plants or the locus thereof being infested with said phytopathogenic disease an effective amount of a combination of

A) component A, the dithla-anthracene of formula I

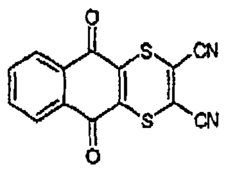

(I)

with

B) a second component B or an optically pure enantiomer thereof, namely with

a N-alkylsulfonyl-alpha-amino acid amide derivative of formula III

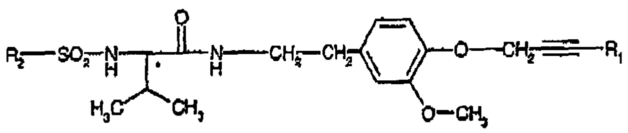

(III)

wherein $R_1$ is hydrogen, $C_1$-$C_4$alkyl, $C_3$-$C_8$cycloalkyl or halophenyl, and $R_2$ is $C_1$-$C_4$alkyl;

or with

an alpha-alkynyloxyphenylacetic acid amide derivative of formula IV

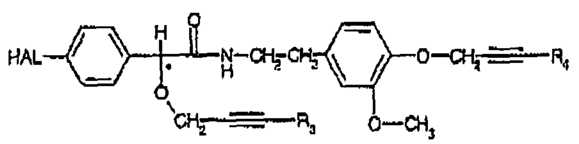

(IV)

wherein HAL stands for halogen, specially for fluoro, chloro or bromo; $R_3$ is hydrogen, $C_1$-$C_4$alkyl or halophenyl; and $R_4$ is hydrogen, $C_1$-$C_4$alkyl, $C_3$-$C_6$cycloalkyl or halophenyl.

**2.** A method according to claim 1 wherein the component B) is selected from compounds of formula III wherein $R_1$ is

hydrogen, fluorophenyl or chlorophenyl; and $R_2$ is methyl or ethyl; and the compounds of formula IV wherein HAL is chloro or bromo; $R_3$ is hydrogen or methyl; and $R_4$ is hydrogen or methyl.

**3.** A method according to claim 1 or 2 wherein the component B) is selected from the group comprising the compounds

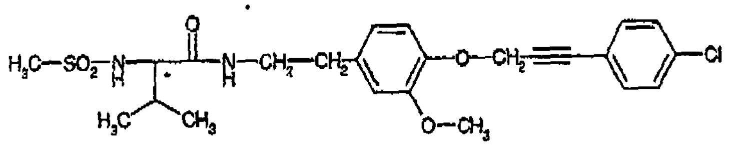

(IIIa) ,

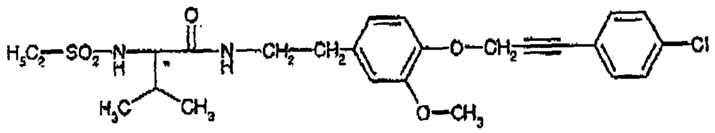

(IIIb) ,

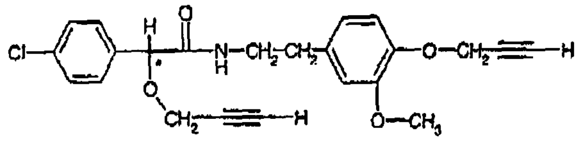

(IVa)

and

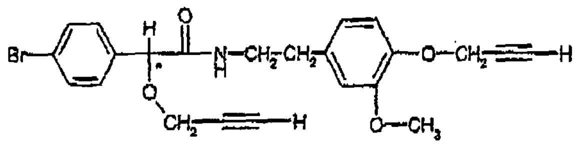

(IVb) .

**4.** A method according to any one of clams 1 to 3 wherein component B) is selected from the compounds of formulae IVa or IVb.

**5.** A fungicidal composition comprising a fungicidally effective combination of components A) and B) according to claim 1 together with an agriculturally acceptable carrier, and optionally a surfactant.

**6.** A composition according to claim 5 wherein the weight ratio of A) to B) is between 200 : 1 and 1 : 5.

## Patentansprüche

**1.** Verfahren zur Bekämpfung phytopathogener Erkrankungen von Nutzpflanzen, umfassend das Aufbringen einer wirksamen Menge einer Kombination von

A) Komponente (A), dem Dithia-anthracen der Formel (I)

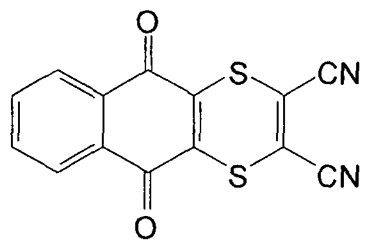

( I )

mit

B) einer zweiten Komponente (B) oder einem optisch reinen Enantiomer davon, mit einem N-Alkylsulfonyl-α-aminosäureamid-Derivat der Formel (III):

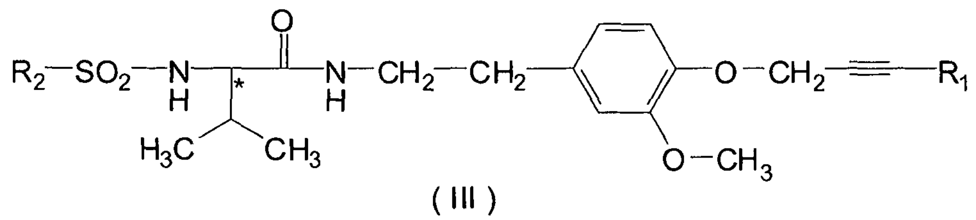

( III )

worin $R_1$ Wasserstoff, $C_{1-4}$-Alkyl, $C_{3-8}$-Cycloalkyl oder Halogenphenyl ist und $R_2$ $C_{1-4}$-Alkyl ist;
oder mit
einem α-Alkinyloxyphenylessigsäureamid-Derivat der Formel (IV):

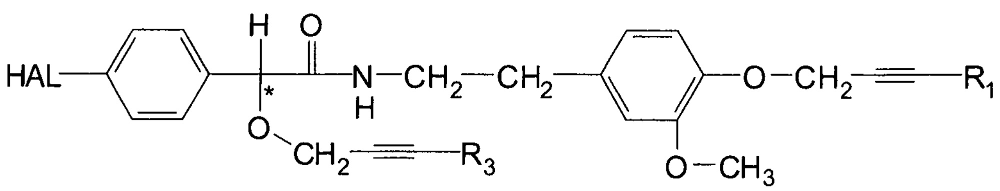

( IV )

worin HAL für Halogen, insbesondere Fluor, Chlor oder Brom, steht; $R_3$ Wasserstoff, $C_{1-2}$-Alkyl oder Halogenphenyl ist und $R_4$ Wasserstoff, $C_{1-4}$-Alkyl, $C_{3-6}$-Cycloalkyl oder Halogenphenyl ist;
auf die Nutzpflanzen oder deren Standorte, die mit der phytopathogenen Erkrankung befallen sind.

**2.** Verfahren gemäss Anspruch 1, wobei die Komponente (B) aus Verbindungen der Formel (III), worin $R_1$ Wasserstoff, Fluorphenyl oder Chlorphenyl ist und $R_2$ Methyl oder Ethyl ist, und Verbindungen der Formel (IV), worin HAL Chlor oder Brom ist, $R_3$ Wasserstoff oder Methyl ist und $R_4$ Wasserstoff oder Methyl ist, ausgewählt ist.

**3.** Verfahren gemäss Anspruch 1 oder 2, wobei die Komponente (B) ausgewählt ist aus der Gruppe, umfassend die Verbindungen:

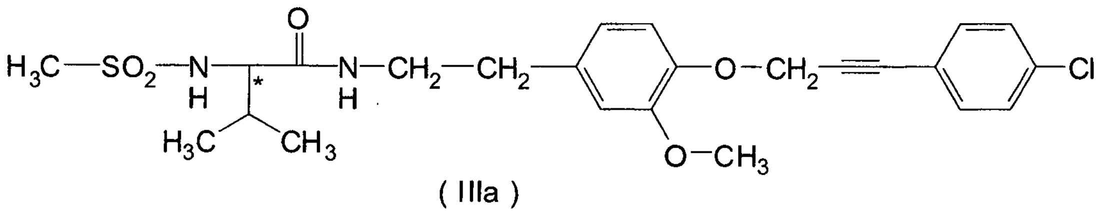

( IIIa )

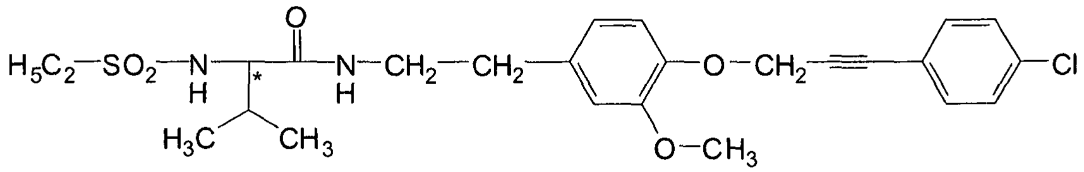

( IIIb )

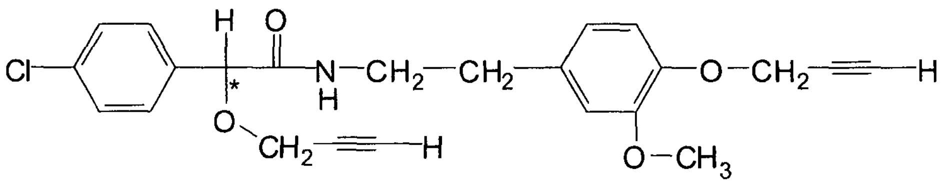

und

( IVa )

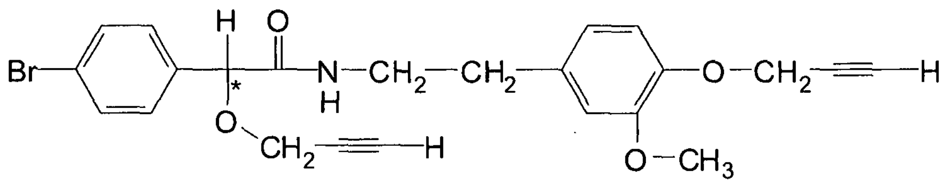

( IVb )

**4.** Verfahren gemäss irgendeinem der Ansprüche 1 bis 3, wobei die Komponente (B) aus den Verbindungen der Formeln (IVa) oder (IVb) ausgewählt ist.

**5.** Fungizidzusammensetzung, umfassend eine fungizid wirksame Kombination der Komponenten A) und B) gemäss Anspruch 1 zusammen mit einem landwirtschaftlich annehmbaren Träger und gegebenenfalls einem Tensid.

**6.** Zusammensetzung gemäss Anspruch 5, wobei das Gewichtsverhältnis von A) zu B) zwischen 200:1 und 1:5 liegt.

## Revendications

**1.** Procédé de lutte contre les maladies phytopathogènes des plantes cultivées, lequel comprend l'application aux plantes cultivées ou à leur locus infesté par ladite maladie phytopathogène d'une quantité efficace d'une combinaison du

A) composant A, dithia-anthracène de formule I

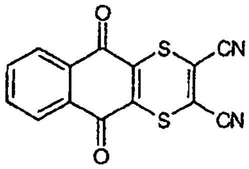

(I)

avec

B) un second composant B ou un énantiomère optiquement pur de ce dernier, à savoir avec un dérivé d'amide d'acide N-alkylsulfonyl-alpha-aminé de formule III

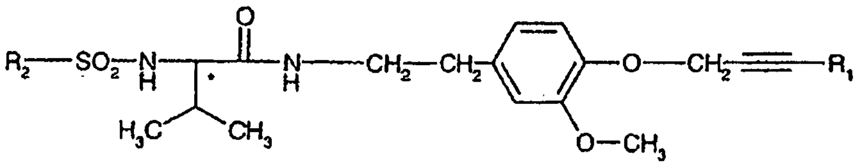

(III)

où $R_1$ est hydrogène, alkyle en $C_1$-$C_4$, cycloalkyle en $C_3$-$C_8$ ou halogénophényle et $R_2$ est alkyle en $C_1$-$C_4$; ou avec

un dérivé d'amide d'acide alpha-alcynyloxyphénylacétique de formule IV

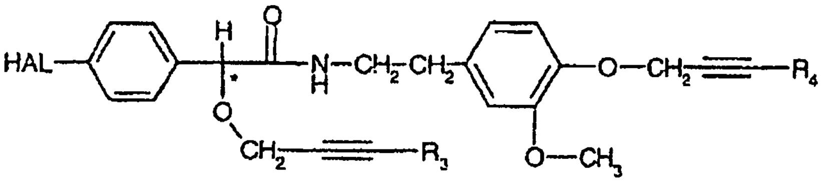

(IV)

où HAL représente un halogène, spécialement fluoro, chloro ou bromo ; $R_3$ est hydrogène, alkyle en $C_1$-$C_4$ ou halogénophényle ; et $P_4$ est hydrogène, alkyle en $C_1$-$C_4$, cycloalkyle en $C_3$-$C_8$ ou halogénophényle.

**2.** Procédé selon la revendication 1 où le composant B) est sélectionné parmi des composés de formule III où $R_1$ est hydrogène, fluorophényle ou chlorophényle ; et $R_2$ est méthyle ou éthyle ; et les composés de formule IV où HAL est chloro ou bromo ; $R_3$ est hydrogène ou méthyle ; et $R_4$ est hydrogène ou méthyle.

**3.** Procédé selon la revendication 1 ou 2 où le composant B) est sélectionné dans le groupe comprenant les composés

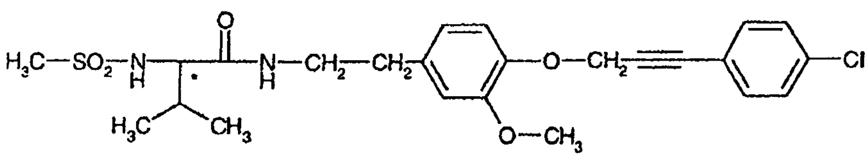

(IIIa) ,

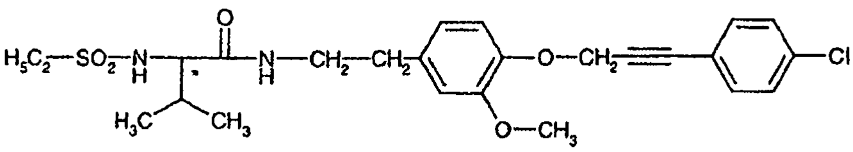

(IIIb) ,

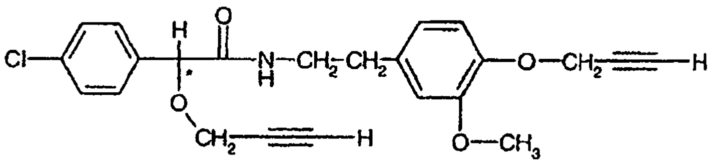 (IVa) et

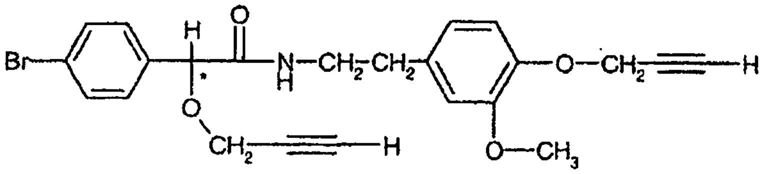 (IVb) .

4. Procédé selon l'une quelconque des revendications 1 à 3 où le composant B) est sélectionné parmi les composés de formule IVa ou IVb.

5. Composition fongicide comprenant une combinaison efficace sur le plan fongicide des composants A) et B) selon la revendication 1 avec un véhicule acceptable en agriculture et facultativement un tensioactif.

6. Composition selon la revendication 5, où le rapport pondéral de A) à B) est compris entre 200 : 1 et 1 : 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 610764 A
- WO 0144215 A
- WO 0187822 A
- WO 9907674 A


### Non-patent literature cited in the description


- **COLBY, S.R.** Calculating synergistic and antagonistic responses of herbicide combination. *Weeds,* 1967, vol. 15, 20-22
- **Levi et al.** *EPPO- Bulletin,* 1986, vol. 16, 651-657